# EUROPÄISCHE PATENTSCHRIFT

(11) **EP 4 202 581 B1**
(45) Veröffentlichungstag und Bekanntmachung des Hinweises auf die Patenterteilung: **10.04.2024**
(21) Anmeldenummer: 21216750.6
(22) Anmeldetag: 22.12.2021
(51) Int. Cl.: G05B 19/042, G05B 13/02

(54) **VERFAHREN ZUM BETREIBEN EINES NAHRUNGSMITTELBEHANDLUNGSGERÄTES**
METHOD FOR OPERATING A FOOD TREATMENT DEVICE
PROCÉDÉ DE FONCTIONNEMENT D'UN APPAREIL DE TRAITEMENT DE PRODUITS ALIMENTAIRES

(43) Veröffentlichungstag der Anmeldung: 28.06.2023
(73) Patentinhaber: Welbilt Deutschland GmbH, 82436 Eglfing (DE)
(72) Erfinder: WILD, Hannes, 82418 Riegsee (DE); MANTER, Arndt, 88263 Horgenzell (DE)
(74) Vertreter: Hoefer & Partner Patentanwälte mbB

(56) Entgegenhaltungen:
- EP-A1- 3 839 845
- DE-A1-102016 219 972

## Beschreibung

Die Erfindung betrifft ein Verfahren zum Betreiben eines Nahrungsmittelbehandlungsgerätes. Des Weiteren wird ein bei der Durchführung des Verfahrens eingesetztes Nahrungsmittelbehandlungsgerät beschrieben.

DE 10 2016 219 972 A1 zeigt ein Verfahren zur Überwachung eines Herstellungsprozesses einer Nahrungsmittel-Masse. Das Verfahren umfasst das Erfassen eines zeitlichen Verlaufs von Messdaten während des Herstellungsprozesses, wobei die Messdaten zumindest eine Eigenschaft der Nahrungsmittel-Masse in einem Behälter eines Küchengeräts anzeigen. Außerdem umfasst das Verfahren das Bestimmen, auf Basis des zeitlichen Verlaufs von Messdaten und insbesondere auf Basis eines Gradienten des zeitlichen Verlaufs von Messdaten, von Informationen in Bezug auf zumindest eine Zutat, die während des Herstellungsprozesses in den Behälter gegeben wurde.

EP 3 839 845 A1 zeigt ein Verfahren und ein System zum Synchronisieren mehrerer Küchengeräte.

Nahrungsmittelbehandlungsgeräte, beispielsweise Gargeräte, können mit einer zentralen Recheneinheit (Server) zur Datenübertragung verbunden sein. Üblicherweise erfolgt die Datenübertragung dabei über das Internet. Dadurch ist es möglich, die Nahrungsmittelbehandlungsgeräte mit Software-Updates zu versorgen, um beispielsweise das Ergebnis bei der Nahrungsmittelbehandlung zu optimieren.

Auf der aus dem Stand der Technik bekannten Datenverbindung zwischen den Nahrungsmittelbehandlungsgeräten und übergeordneten Recheneinheiten baut vorliegende Erfindung auf und stellt sich zur Aufgabe, den Betrieb der Nahrungsmittelbehandlungsgeräte möglichst effizient zu gestallten.

Die Aufgabe wird durch die Merkmale des unabhängigen Anspruchs gelöst. Die abhängigen Ansprüche haben bevorzugte Ausgestaltungen der Erfindung zum Gegenstand.

Im Rahmen des erfindungsgemäßen Verfahrens kommt zumindest ein Nahrungsmittelbehandlungsgerät zum Einsatz, das im Folgenden als "Gerät" bezeichnet wird. Insbesondere berücksichtigt das Verfahren den Informationsaustausch mit mehreren dieser Geräte, wobei sich es sich um gleiche oder unterschiedliche Geräte handeln kann. Mehrere der Geräte, die gleiche oder ähnliche Eigenschaften aufweisen, können dabei zu Gerätegruppen zusammengefasst sein.

Insbesondere handelt es sich bei den Geräten um Nahrungsmittelerwärmungsgeräte, insbesondere Gargeräte, Fritteusen, Durchlauföfen, Kombidämpfer, Grills, Herde, Mikrowellenöfen und/oder Warmhalteöfen. Des Weiteren umfassen die hier betrachteten Geräte beispielsweise Eismaschinen zum Herstellen und/oder Mischen von Speiseeis sowie beispielsweise auch Getränkeanlagen, insbesondere Schankanlagen oder Kaffeemaschinen.

Vorzugsweise handelt es sich bei den hier betrachteten Geräten um gewerbliche Geräte, die nicht in privaten Haushalten, sondern in Gewerbebetrieben, insbesondere Küchen- und Lebensmittelausgabestationen zur Anwendung kommen.

Vorliegender Erfindung liegt grundsätzlich die Idee zugrunde, von dem Nutzer des Gerätes und vorzugsweise von dem Gerät selbst Rückmeldungen einzusammeln, die wiederum zur Verbesserung der Geräte, insbesondere der Software der Geräte, genutzt werden können. Diese Rückmeldung wird im Rahmen der Erfindung als "Feedback-Information" bezeichnet. Bei dem Nutzer des Gerätes handelt es sich insbesondere um die Person, die das Gerät bedient. Dabei berücksichtigt vorliegende Erfindung, dass solche Feedback-Informationen von unterschiedlicher Qualität seien können. Deshalb erfolgt eine Klassifizierung der Feedback-Information, wodurch nur entsprechend klassifizierte und somit qualitativ hochwertige Feedback-Information letztendlich für den Prozess der Verbesserung genutzt werden.

Im Detail umfasst das erfindungsgemäße Verfahren die folgenden Schritte, vorzugsweise in gegebener Reihenfolge:
Gemäß **Schritt A** erfolgt das Erfassen von Feedback-Informationen. Dieses Erfassen von Feedback-Informationen kann insbesondere mehrmalig am selben Gerät erfolgen. Dabei kann die Feedback-Information regelmäßig oder unregelmäßig erfasst werden. Insbesondere kann das Erfassen der Feedback-Information bzw. der Erfassungszeitpunkt von Betriebszuständen des entsprechenden Gerätes abhängen. Besonders vorzugsweise erfolgt im Rahmen des Verfahrens das Erfassen von Feedback-Informationen an einer Vielzahl von Geräten.

Die Feedback-Information erfolgt mittels einer Mensch-Maschine-Schnittstelle, die im folgenden "MMS" genannt wird. Die MMS befindet sich an dem Gerät oder ist zumindest informationstechnisch mit dem Gerät verbunden. Mittels der MMS kann das Gerät Informationen an den Nutzer ausgeben und kann Eingaben vom Nutzer erfassen. Die detaillierte Ausgestaltung wird im Rahmen der Schritte A1 und A2 im Detail erläutert. Hinsichtlich der Hardware kann die MMS beispielsweise als berührungsempfindliches Display und/oder als Sprachsteuereinheit am Gerät ausgebildet sein. Zusätzlich oder alternativ kann die MMS ein Endgerät, insbesondere tragbares Endgerät (z.B. Smartphone, Smartwatch oder Tablet) sein, das informationstechnisch mit dem Gerät verbunden ist.

Zusätzlich zur MMS kann das Erfassen der Feedback-Information über zumindest einen Sensor am Gerät erfolgen. Im Detail wird die Feedback-Erfassung über den Sensor anhand der Schritte A3, A4 und A5 erläutert.

Gemäß **Schritt B** erfolgt das Bilden eines Feedback-Datensatzes. Dies erfolgt vorzugsweise mit einer lokalen Steuereinheit, die dem Gerät zuzuordnen ist. Die Steuereinheit kann im Gerät integriert sein oder sich, beispielweise als lokaler Rechner, am Aufstellungsort des Gerätes befinden. Der Feedback-Datensatz repräsentiert eine oder mehrere der erfassten Feedback-Informationen. Im einfachsten Fall kann solch eine Feedback-Information den Informationsgehalt von beispielsweise "JA/NEIN" oder "GUT/SCHLECHT" usw. enthalten. In der praktischen Ausgestaltung wird die Feedback-Information jedoch vorzugsweise komplexer ausgestaltet und umfasst insbesondere mehrere Abstufungen. Darüber hinaus kann das Gerät zu der reinen Feedback-Information zugehörige Begleitumstände und/oder Betriebszustände des Gerätes erfassen und in dem zugehörigen Feedback-Datensatz hinterlegen. Zu den Begleitumständen können beispielsweise die Uhrzeit, das zu behandelnde Nahrungsmittel, Klimabedingungen im Raum, usw. zählen. Der Betriebszustand beschreibt beispielsweise das durchgeführte Funktionsprogramm des Gerätes, Füllstände am Gerät, usw.

In einem **Schritt C** erfolgt das Senden der Feedback-Datensätze von dem Gerät zu einer zentralen Recheneinheit. Das Gerät umfasst hierzu insbesondere eine Datenschnittstelle. Der Informationsaustausch zwischen der zentralen Recheneinheit und dem Gerät kann drahtlos und/oder drahtgebunden erfolgen. Insbesondere erfolgt der Datenaustausch über das Internet. Bei der zentralen Recheneinheit kann es sich um einen einzelnen Rechner (auch: Server) handeln. Alternativ kann die zentrale Recheneinheit auch über mehrere Standorte verteilt bzw. vollständig oder teilweise in einer Cloud realisiert sein. Insbesondere ist vorgesehen, dass die zentrale Recheneinheit vom Hersteller des Gerätes oder einer Vertriebsorganisation des Gerätes betrieben wird.

In einem **Schritt D** erfolgt ein Klassifizieren der Feedback-Datensätze. Dieses Klassifizieren erfolgt in der zentralen Recheneinheit. Hierbei wird der einzelne Feedback-Datensatz anhand von zumindest einem hinterlegten Feedback-Vergleichsdatensatz klassifiziert. Es können auch mehrere der Feedback-Datensätze zusammengefasst und gemeinsam klassifiziert werden. Des Weiteren ist es möglich, einen oder mehrere Feedback-Datensätze anhand von mehreren Feedback-Vergleichsdatensätzen zu klassifizieren.

Insbesondere erfolgt im Rahmen der Klassifizierung eine Überprüfung, inwieweit der Feedback-Datensatz mit dem zumindest einen Feedback-Vergleichsdatensatz übereinstimmt oder von diesem Abweicht. So kann im Rahmen dieser Klassifizierung der Feedback-Datensatz auch als "Ist-Wert" und der Feedback-Vergleichsdatensatz als "Soll-Wert" bezeichnet werden.

Insbesondere wird mittels der Klassifizierung der Feedback-Datensätze zwischen glaubwürdiger und unglaubwürdiger Feedback-Information unterschieden, wobei beliebig viele Abstufungen zwischen Glaubwürdig und Unglaubwürdig möglich sind. Dabei kann berücksichtigt werden, dass es aus unterschiedlichsten Gründen zu einer unglaubwürdigen Feedback-Information kommt. Beispielsweise kann eine von einem Sensor erfasste Feedback-Information aufgrund von Hardware- oder Softwarefehlern eine falsche und somit "unglaubwürdige" Feedback-Information liefern. Des Weiteren kann die Feedback-Information vom Nutzer abgefragt werden, wobei Nutzer aus unterschiedlichsten Gründen ein Feedback abgeben können, das letztendlich als "unglaubwürdig" zu klassifizieren ist. Beispielsweise kann die über das MMS an den Nutzer gestellte Frage in der falschen Sprache abgefasst sein oder der Nutzer kann schlicht unter zu hoher Arbeitsbelastung stehen, so dass er irgendeine Eingabe an der MMS macht, um möglichst schnell die Abfrage der Feedback-Information an der MMS zu beenden.

In einem **Schritt E** wird mittels der zentralen Recheneinheit ein Veränderungssignal erzeugt. Dabei können auch mehrere verschiedene Veränderungssignale für mehrere verschiedene Geräte erzeugt werden. Das Veränderungssignal ist von der zuvor durchgeführten Klassifizierung der Feedback-Datensätze abhängig. Auch mehrere klassifizierte Feedback-Datensätze können dabei zusammengefasst werden, um letztendlich die Ausgestaltung eines Veränderungssignals für ein bestimmtes Gerät oder eine bestimmte Gerätegruppe zu beeinflussen.

Im **Schritt F** wird das Veränderungssignal an das Gerät gesendet. Dabei können auch gleiche oder verschiedene Veränderungssignale an mehrere Geräte gesendet werden. Wie bereits beschrieben, erfolgt der Datenaustausch, so auch das Senden des Veränderungssignals, vorzugsweise über das Internet und die Datenschnittstelle des Gerätes.

Im **Schritt G** erfolgt ein Verändern der MMS im Gerät basierend auf dem Veränderungssignal undvorzugsweise ein Verändern eines Funktionsprogramms des Gerätes basierend auf dem Veränderungssignal. Demensprechend ist das Veränderungssignal dazu ausgebildet und enthält die nötigen Informationen, damit das Gerät die MMS und/oder ein Funktionsprogramm entsprechend ändern kann.

Beim Verändern der MMS wird eine an den Nutzer gerichtete "Nutzereingabe-Aufforderung" entsprechend dem Veränderungssignal verändert. Diese "Veränderung der an den Nutzer gerichteten Nutzereingabe-Aufforderung" umfasst insbesondere das Aktivieren und Deaktivieren einer solchen Nutzereingabe-Aufforderung sowie das inhaltliche Verändern dieser Nutzereingabe-Aufforderung. Auf die Nutzereingabe-Aufforderung kann der Nutzer über die MMS eine Nutzer-Rückmeldung geben, die wiederum ein Feedback-Information gemäß Schritt A darstellt.

Allerdings kann die gesammelte Feedback-Information, insbesondere von einer Vielzahl von Geräten, auch dazu genutzt werden, nicht nur die MMS zu verändern, sondern beispielsweise auch ein Funktionsprogramm des Gerätes zu ändern.

Wie bereits erwähnt, können die Feedback-Informationen auf unterschiedliche Arten erfasst werden. Gemäß **Schritt A1** ist bevorzugt vorgesehen, dass die Feedback-Information eine Nutzer-Rückmeldung umfasst, die über die MMS vom Nutzer angefordert wird, insbesondere in Form einer Frage an den Nutzer. Dabei kann es sich insbesondere um eine "Nutzereingabe-Aufforderung" handeln, die im Rahmen des Schritts G bereits verändert wurde oder die im Auslieferungszustand des Gerätes bereits aktiviert ist.

So kann die MMS, beispielsweise über das berührungsempfindliche Display oder die Sprachsteuereinheit, den Nutzer dazu auffordern, eine Nutzer-Rückmeldung zu geben. Diese Nutzer-Rückmeldung kann der Nutzer an die MMS geben, beispielsweise durch Drücken auf dem Display oder durch eine Spracheingabe - wodurch die Feedback-Information an da Gerät übergeben wird. In dem daraufhin erzeugten Feedback-Datensatz kann dann neben der Feedback-Information, also beispielsweise der Antwort auf die Frage, auch hinterlegt sein, welche Frage an den Nutzer gestellt wurde und beispielsweise zu welchen Umständen dies erfolgte.

Des Weiteren ist vorgesehen, dass gemäß **Schritt A2** die erfasste Feedback-Information eine Bedienungseingabe umfasst. Diese Bedienungseingabe wird vom Nutzer an der MMS vorgenommen und dient zum Bedienen des Gerätes, beispielsweise zum Auswählen, Starten oder Beenden eines Funktionsprogrammes. Für diese Art der Feedback-Information wird von der MMS keine Frage an den Nutzer gestellt, sondern es wird eine ohnehin vom Nutzer vorgenommene Bedienungseingabe zum Bedienen des Gerätes dazu genutzt, um eine Feedback-Information zu erhalten. Wenn z.B. das Gerät erkennt, dass der Nutzer ein bestimmtes Nahrungsmittel in das Gerät einschiebt und daraufhin das Gerät ein Funktionsprogramm A vorschlägt, und der Nutzer daraufhin mittels einer Bedienungseingabe ein anderes Funktionsprogramm auswählt, so können diese Umstände als Feedback-Information in dem Feedback-Datensatz zusammengefasst werden. Daraus lässt sich z. B. ableiten, dass der vom Gerät gegebene Vorschlag zum Funktionsprogramm A unter Berücksichtigung der gegebenen Umstände falsch sein kann.

Insbesondere ist zugehörig zu Schritt A2 vorgesehen, dass für den Schritt D ein spezifiziertes Feedback verwendet wird, das im Gerät oder in der zentralen Recheneinheit basierend auf einem Grad der Übereinstimmung der Bedienungseingabe mit einem hinterlegten Bedienungseingabe-Erwartungswert bestimmt wird. Im o.g. Beispiel wäre dieser Bedienungseingabe-Erwartungswert die Akzeptanz des Funktionsprogramms A durch den Nutzer. Die Tatsache, dass der Nutzer von diesem Vorschlag abweicht und ein leicht geändertes Funktionsprogramm oder ein vollständig anderes Funktionsprogramm auswählt, kann dazu genutzt werden, um den Grad der Übereinstimmung zwischen Bedienungseingabe und Bedienungseingabe-Erwartungswert zu bestimmen und somit die Feedback-Information weiter zu spezifizieren.

Gemäß **Schritt A3** umfasst die erfasste Feedback-Information eine am Gerät vorgenommene Nutzerhandlung des Nutzers, wobei diese Nutzerhandlung über den zumindest einen Sensor erfasst wird. Im Rahmen der Beschreibung der Erfindung wird meist von einem Sensor am Gerät gesprochen. Tatsächlich können allerdings auch mehrere gleiche oder verschiedene Sensoren verwendet werden. Um die Nutzerhandlung zu erfassen, ist der Sensor vorzugsweise als Kamera ausgebildet. Über diese Kamera und eine entsprechende Auswertung kann beispielsweise erfasst werden, ob der Nutzer einem Vorschlag des Gerätes folgt, beispielsweise eine optische Kontrolle der Nahrungsmittel vornimmt oder das Gerät reinigt.

Insbesondere ist zugehörig zu Schritt A3 vorgesehen, dass für den Schritt D ein spezifiziertes Feedback verwendet wird, das im Gerät oder in der zentralen Recheneinheit basierend auf einem Grad der Übereinstimmung der Nutzerhandlung mit einem hinterlegten Nutzerhandlung-Erwartungswert bestimmt wird. Insbesondere wenn über die Kamera eine Nutzerhandlung erfasst wird, bietet sich deren genaue Auswertung in der zentralen Recheneinheit an, da hier mit relativ großem Rechenaufwand Bilder und Videos analysiert werden können.

Im Rahmen der Schritte A1 bis A3 wurde ein direktes Erfassen der Feedback-Information über den Nutzer beschrieben. Allerdings ist es auch möglich, über den beschriebenen Sensor bzw. mehrere der Sensoren die Feedback-Information direkt am Gerät zu erfassen. Dabei ist die Feedback-Information vorzugsweise vom Nutzer direkt oder indirekt beeinflusst.

Gemäß **Schritt A4** wird über den Sensor, insbesondere ausgebildet als Kamera, das mit dem Gerät behandelte Nahrungsmittel und/oder zumindest ein Teil des Gerätes und/oder ein Zustand des Gerätes erfasst, woraus entsprechende Sensordaten erzeugt werden. Die Feedback-Information umfasst dann wiederum diese Sensordaten.

Der Sensor kann beispielsweise erfassen, welches Nahrungsmittel in das Gerät eingeschoben wird. Wenn der Nutzer zu dem eingeschobenen Nahrungsmittel ein eigentlich nicht passendes Funktionsprogramm auswählt, kann daraus eine entsprechende Feedback-Information entstehen, die darauf hindeutet, dass das eigentlich für dieses Nahrungsmittel gedachte Funktionsprogramm ungeeignet ist.

Durch Erfassen zumindest eines Teil des Gerätes mit dem Sensor (insbesondere Kamera) kann beispielsweise der Reinigungszustand des Gerätes erkannt werden. Daraus lässt sich beispielsweise die Feedback-Information ableiten, dass vorgeschlagene Reinigungszyklen für dieses Gerät unpassend sind.

Ferner kann mittels des Sensors ein Zustand des Gerätes erfasst werden, wobei dieser Zustand des Gerätes insbesondere von einer Nutzerhandlung oder einer Nutzernicht-Handlung abhängig ist. Rein beispielhaft sei der Füllstand eines Hilfsmittels des Gerätes (z.B. Reinigungsflüssigkeit) genannt, der über einen Sensor am Gerät erfasst werden kann. Der über den Sensor erfasste Füllstand gibt im Rahmen der Feedback-Information an, ob der Nutzer das Hilfsmittel, insbesondere nach entsprechender Aufforderung durch das Gerät, nachgefüllt hat oder nicht. Insofern kann der Sensor eine Feedback-Information über eine Handlung oder Nicht-Handlung eines Nutzers liefern.

Insbesondere ist zugehörig zu Schritt A4 vorgesehen, dass für den Schritt D ein spezifiziertes Feedback verwendet wird, das im Gerät oder in der zentralen Recheneinheit basierend auf einem Grad der Übereinstimmung der Sensordaten mit hinterlegten SOLL-Sensordaten bestimmt wird.

Gemäß **Schritt A5** kann über den Sensor ein Hilfsmittel-Wert des Geräts, insbesondere ein Mengenwert und/oder Qualitätswert eines Hilfsmittels des Geräts, erfasst werden. Die Feedback-Information umfasst wiederum den Hilfsmittel-Wert. Bei dem Hilfsmittel kann es beispielsweise um den Füllstand eines Reinigungsmittels des Geräts handeln oder beispielsweise um den Qualitätswert des Frittieröls, sofern das Gerät eine Fritteuse ist. Stimmt beispielsweise der Füllstand des Reinigungsmittels nicht überein mit einem angenommenen Füllstand, der sich aus der Anzahl an durchgeführten Reinigungsprogrammen ergibt, so kann die diesbezügliche Abweichung Teil der Feedback-Information sein und zur Verbesserung genutzt werden.

Wie eingangs erwähnt, ist bevorzugt vorgesehen, dass im Rahmen des Verfahrens mehrere Gerätegruppen mit jeweils mehreren Geräten zum Einsatz kommen. Dabei ist insbesondere vorgesehen, dass zu mehreren Geräten jeder Gerätegruppe im Schritt A Feedback-Informationen erfasst werden und/oder im Schritt F zu mehreren Geräten jeder Gerätegruppe ein Veränderungssignal gesendet wird.

Dabei ist es selbstverständlich auch möglich, dass in jedem Gerät einer jeweiligen Gruppe die Feedback-Information erfasst wird. Allerdings kann es auch ausreichen, in nur manchen der Geräte Feedback-Informationen zu sammeln und aus diesen gesammelten Feedback-Informationen Rückschlüsse zur Erzeugung des Veränderungssignals für mehrere oder alle Geräte derselben Gerätegruppe zu erzeugen. Genauso ist es möglich, im Schritt F das Veränderungssignal an alle Geräte der jeweiligen Gerätegruppe zu senden. Jedoch können dabei einzelne Geräte der Gerätegruppe auch ausgenommen werden oder ein inhaltlich anderes Veränderungssignal erhalten.

Ein Vorteil bei der Gruppenbildung aus mehreren Geräten liegt darin, dass sehr viele Feedback-Informationen eingesammelt werden können, die wiederum zu Feedback-Vergleichsdatensätzen ausgewertet werden können. Darüber hinaus ist es durch die Gruppenbildung möglich, einzelne Geräte zumindest zeitweise "auszuschließen", wenn Feedback-Informationen bzw. die zugehörigen Feedback-Datensätze von diesen Geräten entsprechend als "unglaubwürdig" klassifiziert werden. Nichtsdestotrotz können über das Veränderungssignal die Funktionsprogramme aller Geräte in der Gerätegruppe verbessert werden, unabhängig davon, ob das einzelne Gerät eine glaubwürdige oder unglaubwürdige Feedback-Information abgibt. Darüber hinaus ist es insbesondere in der Gerätegruppe sinnvoll, die Geräte mit glaubwürdigen Feedback-Datensätzen zu identifizieren und insbesondere an diesen Geräten über das Veränderungssignal die Nutzer über Nutzereingabe-Aufforderungen der MMS zur Abgabe weiterer Feedback-Informationen aufzufordern.

Hierzu ist insbesondere vorgesehen, dass sich die Geräte der unterschiedlichen Gerätegruppen zumindest bezüglich der folgenden Eigenschaften unterscheiden: Gerätetyp der Geräte und/oder Einsatzzweck der Geräte und/oder regionaler Aufstellungsort der Geräte und/oder Geräteausstattung der Geräte.

Unter Gerätetyp ist insbesondere zu verstehen, welche Art von Nahrungsmittelbehandlungsgerät es ist. So können beispielsweise Kombidämpfer in einer Gruppe und Fritteusen in einer anderen Gruppe zusammengefasst werden. Bei dem Einsatzzweck handelt es sich insbesondere um die Verwendung des Gerätes beim jeweiligen Nutzer, so dass beispielsweise Kombidämpfer in Bäckereien in einer Gruppe und Kombidämpfer in Kantinen in einer anderen Gruppe zusammengefasst werden. Der regionale Aufstellungsort kann entsprechende regionale Unterschiede beispielsweise in einzelnen Kontinenten, Ländern oder Regionen (beispielsweise Alpenraum) berücksichtigen. Bei der Geräteausstattung der Geräte wird berücksichtigt, dass relativ ähnliche Geräte, beispielsweise zwei Kombidämpfer einer Baureihe, unterschiedliche Ausstattungen aufweisen könne. Ein Gerät kann zum Beispiel "mit automatischem Reinigungsprogramm" und andere Geräte "ohne automatischem Reinigungsprogramm" ausgestattet sein.

Im Rahmen des erfindungsgemäßen Verfahrens ist auch vorgesehen, dass ein und dasselbe Gerät mehreren Gruppen zugeordnet sein kann. Es ist beispielsweise für die Auswertung von Feedback-Informationen bezüglich eines bestimmten Garprogrammes unerheblich, ob dieses Gerät mit automatischer Reinigungsfunktion ausgestattet ist oder nicht. So kann hinsichtlich der Auswertung einer solchen Feedback-Information die Gruppe z.B. nur in Abhängigkeit vom Gerätetyp oder regionalem Aufstellungsort oder Einsatzzweck gebildet werden, wohingegen bei einer Auswertung einer Feedback-Information bezüglich des automatischen Reinigungsprogramms eine Gruppe unter Berücksichtigung der Geräteausstattung gebildet wird.

Die Klassifizierung des jeweiligen Feedback-Datensatzes erfolgt vorzugsweise in Abhängigkeit seiner, insbesondere graduellen, Übereinstimmung mit zumindest einem Feedback-Vergleichsdatensatz. Dabei kann, wie eingangs erwähnt, eine einfache Klassifizierung in glaubwürdiges und unglaubwürdiges Feedback erfolgen. Besonders bevorzugt ist jedoch vorgesehen, den Feedback-Datensatz mit einem oder mehreren Feedback-Vergleichsdatensätzen derart zu vergleichen, so dass sich eine graduelle Klassifizierung ergibt. Unter gradueller Klassifizierung ist zu verstehen, dass der Feedback-Datensatz und die zugehörige Feedback-Information in mehr als zwei unterschiedliche Klassen klassifiziert werden kann.

Diese Überprüfung des Feedback-Datensatzes bzw. das Gegenüberstellen des Feedback-Datensatzes mit dem zumindest einem Feedback-Vergleichsdatensatz erfolgt in der zentralen Recheneinheit vorzugsweise unter Zuhilfenahme von künstlicher Intelligenz. Wie bereits erwähnt, kann solch ein Feedback-Datensatz beispielsweise Bilder oder Videos enthalten, die über entsprechende Algorithmen, die auf künstlicher Intelligenz basieren, ausgewertet werden können.

Die Feedback-Vergleichsdatensätze basieren vorzugsweise auf: mehreren Feedback-Datensätzen desselben Gerätes und/oder mehreren Feedback-Datensätzen mehrerer Geräte, insbesondere derselben Gerätegruppe, und/oder auf empirischen Daten.

Von dem einen Gerät oder von den mehreren Geräten werden eine Vielzahl an Feedback-Datensätzen gesammelt, die in der zentralen Recheneinheit ausgewertet werden. So können durch statistische Auswertung aus den mehreren Feedback-Datensätzen Feedback-Vergleichsdatensätze erzeugt werden. Dabei werden im Rahmen der statistischen Auswertung, vorzugsweise mittels künstlicher Intelligenz, insbesondere Muster und/oder Regelmäßigkeiten und/oder Unregelmäßigkeiten und/oder Cluster in den Feedback-Datensätzen identifiziert und entsprechend in den Feedback-Vergleichsdatensätzen hinterlegt. Dadurch kann bei einem neuen Feedback-Datensatz erkannt werden, ob die zugrundeliegende Feedback-Information beispielsweise in ein bekanntes Muster passt oder nicht. Sollte die Feedback-Information nicht zu einem bekannten Muster passen, kann der entsprechende Feedback-Datensatz beispielsweise als unglaubwürdig klassifiziert werden.

Die statistisch erzeugten Feedback-Vergleichsdatensätze können basierend auf empirischen Daten manuell überarbeitet werde. Ferner ist es möglich, basierend auf empirischen Daten Feedback-Vergleichsdatensätze zu schreiben und in der zentralen Recheneinheit zu hinterlegen.

In der zentralen Recheneinheit kann in Abhängigkeit der Klassifizierung des Feedback-Datensatzes ein sog. Veränderungsdatensatz erzeugt und/oder verändert werden. In diesem Veränderungsdatensatz kann hinterlegt werden, in welcher Weise und/oder zu welchem Zeitpunkt mittels des Veränderungssignals die Nutzereingabe-Aufforderung der MMS am Gerät verändert werden soll. Zusätzlich oder alternativ wird im Veränderungsdatensatz hinterlegt, in welcher Weise und/oder zu welchem Zeitpunkt mittels des Veränderungssignals das Funktionsprogramm des Gerätes verändert wird.

Durch das Anlegen und das Anpassen solch eines Veränderungsdatensatzes in der zentralen Recheneinheit kann berücksichtigt werden, dass bestimmte Geräte oder Gerätegruppen zu bestimmten Zeiten, beispielsweise Tageszeiten oder Jahreszeiten, über ein entsprechendes Veränderungssignal angesteuert werden sollen. Dadurch ist es möglich, unter bestimmten Bedingungen, beispielsweise der Zeit, das Gerät hinsichtlich der Nutzereingabe-Aufforderung und/oder hinsichtlich des Funktionsprogramms zu beeinflussen. Beispielsweise kann erkannt werden, dass zu bestimmten Uhrzeiten, beispielsweise in den Morgenstunden bei einer Bäckerei, wegen eines zu hohen Stresslevels keine glaubwürdigen Feedback-Informationen zu erwarten sind. Basierend auf dieser Information kann die Funktion zur Nutzereingabe-Aufforderung der MMS für die entsprechende Tageszeit deaktiviert werden, um den Nutzer nicht zu nerven. Unter Umständen kann auch erkannt werden, dass Funktionsprogramme, beispielsweise der Wert der Luftfeuchtigkeit bei einem Garprogramm, in Abhängig der Jahreszeit und/oder in Abhängigkeit von sonstigen Randbedingungen, wie beispielsweise dem Wetter, anzupassen ist. Auch solche Informationen können in dem Veränderungsdatensatz hinterlegt werden, um bedarfsgerecht Veränderungssignale zu erzeugen und an die Geräte zu senden.

Wie bereits erläutert, kann im Schritt G ein Funktionsprogramm vollständig oder teilweise im Gerät verändert werden. Unter vollständiger Änderung wird insbesondere verstanden, dass Funktionsprogramme gelöscht oder hinzugefügt werden. Bei der teilweisen Änderung von Funktionsprogrammen kann es sich beispielsweise um Anpassung von einzelnen Parametern im Funktionsprogramm handeln.

Unter Funktionsprogrammen sind insbesondere, jedoch nicht ausschließlich, folgende Programme zu verstehen: Ein Nahrungsmittelbehandlungs-Programm, beispielsweise ein Garprogramm mit Parametern für Zeit, Temperatur, Feuchtigkeit usw. zur Behandlung von Nahrungsmitteln in dem Gerät; und/oder ein Reinigungsprogramm zum Reinigen des Gerätes; und/oder ein Assistenzprogramm (auch Assistenzsystem), das den Nutzer bei der Bedienung und/oder Wartung des Gerätes unterstützt, insbesondere durch Anweisungen über die MMS. Zu den hier berücksichtigten Assistenzprogrammen zählen zum Beispiel ein Auswahl-Programm, mit dem wiederum weitere Programme, auch weitere Funktionsprogramme des Gerätes, ausgewählt werden können; und/oder ein Hilfsprogramm zur Anzeige von Wechselzeitpunkten und/oder Mengen und/oder Qualitäten eines Hilfsmittels des Gerätes, beispielsweise Reinigungsmittel oder Frittieröl.

Die Erfindung umfasst ferner das beschriebene Nahrungsmittelbehandlungsgerät, welches zur Benutzung bei der Durchführung des beschriebenen Verfahrens vorgesehen ist. Das Gerät umfasst hierzu die beschriebene Mensch-Maschine-Schnittstelle (MMS) und/oder den zumindest einen beschriebenen Sensor, jeweils ausgebildet zur Durchführung des Schritts A; die beschriebene Steuereinheit, ausgebildet zur Durchführung des Schritts B; die beschriebene Datenschnittstelle, ausgebildet zum Senden des Feedback-Datensatzes gemäß Schritt C und zum Empfangen des gemäß Schritt F gesendeten Veränderungssignals; wobei das Gerät, insbesondere die Steuereinheit, zum Verändern der an den Nutzer gerichteten Nutzereingabe-Aufforderung der MMS und/oder zum Verändern des Funktionsprogramms des Geräts gemäß Schritt G, ausgebildet ist.

Die im Rahmen des Verfahrens beschriebenen vorteilhaften Ausgestaltungen und zugehörigen Unteransprüche finden entsprechend vorteilhafte Anwendung für das erfindungsgemäße Nahrungsmittelbehandlungsgerät.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Fig. 1: eine schematische Darstellung von erfindungsgemäßen Geräten und einer zentralen Recheneinheit zur Durchführung des erfindungsgemäßen Verfahrens;
- Fig. 2: eine schematische Darstellung der Verfahrensschritte A bis G des erfindungsgemäßen Verfahrens;
- Fig. 3: ein erfindungsgemäßes Gerät zur Verwendung bei der Durchführung des erfindungsgemäßen Verfahrens, ausgebildet als Kombidämpfer; und
- Fig. 4: ein erfindungsgemäßes Gerät zur Verwendung bei der Durchführung des erfindungsgemäßen Verfahrens, ausgebildet als Fritteuse.

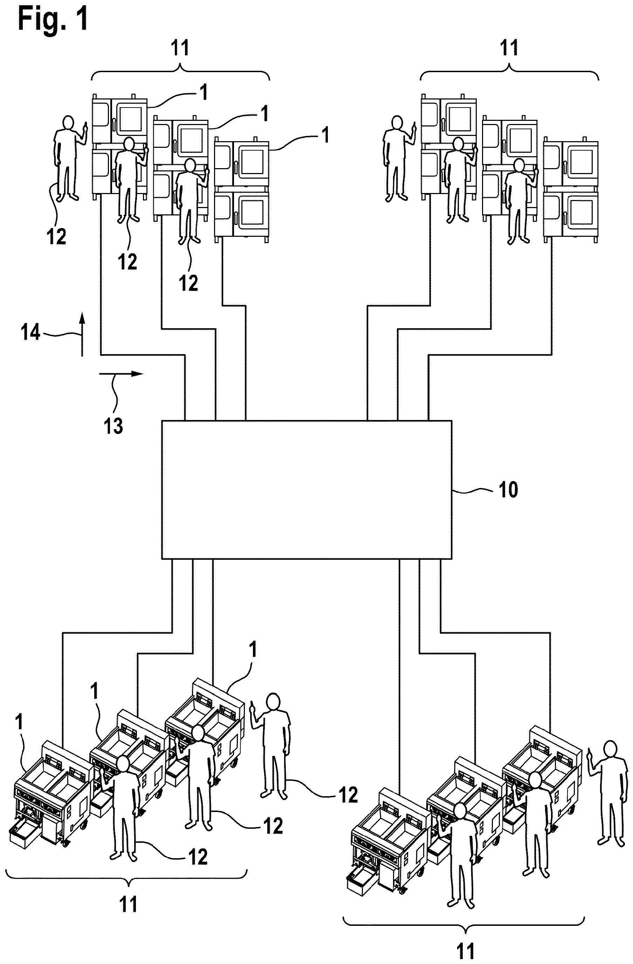

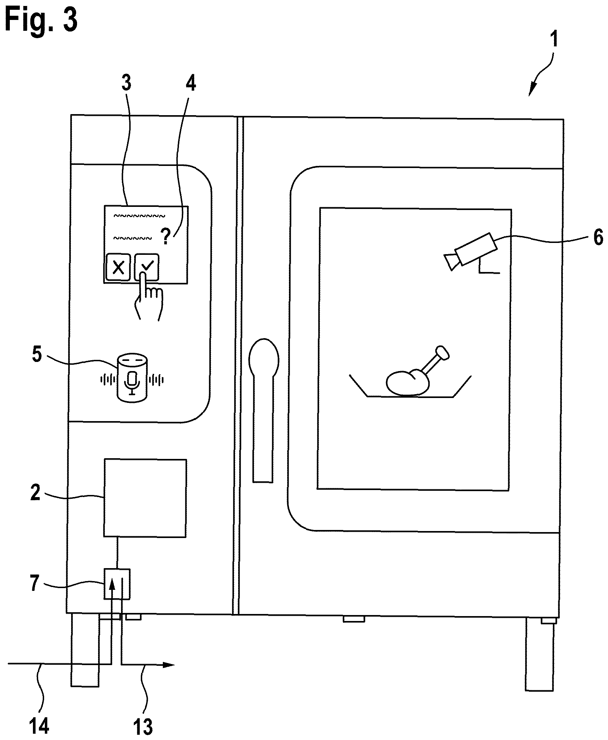

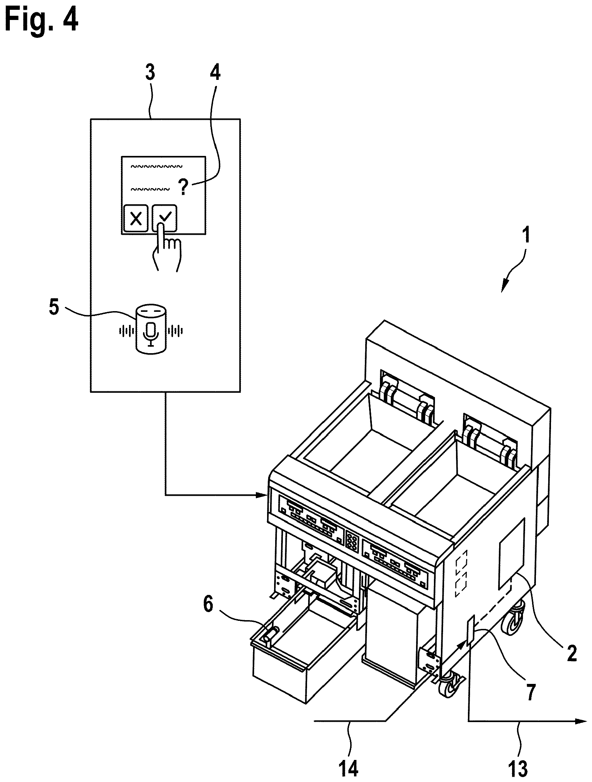

Fig. 1 zeigt schematisch vier Gerätegruppen 11 mit jeweils mehreren Geräten 1. Jedem Gerät 1 ist ein Nutzer 12 zugeordnet. Bei den Geräten 1 kann es sich beispielsweise um einen Kombidämpfer gemäß Fig. 3 oder eine Fritteuse gemäß Fig. 4 handeln. Wie im allgemeinen Teil der Beschreibung erläutert, werden in den Gerätegruppen 11 Geräte 1 zusammengefasst, die sich beispielsweise hinsichtlich ihres Gerätetyps oder ihres regionalen Aufstellungsortes gleichen oder ähneln.

Fig. 1 zeigt schematisch, dass jedes Gerät 1 über eine entsprechende Datenleitung mit einer zentralen Recheneinheit 10 verbunden ist. Über diese Datenleitung, sei es kabelgebunden oder kabellos, erfolgt der Austausch von Feedback-Datensätzen 13 und Veränderungssignalen 14.

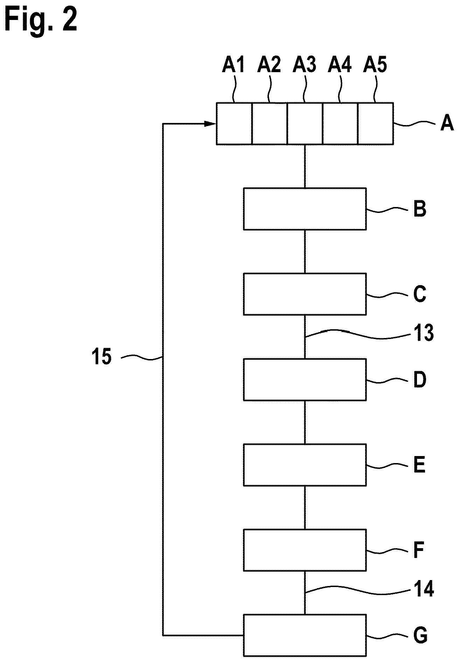

Fig. 2 zeigt schematisch den Ablauf der Schritte A bis G des Verfahrens. Diese Verfahrensschritte sind im allgemeinen Teil der Beschreibung ausführlich erläutert und gelten für dieses Ausführungsbeispiel. Im Detail handelt es sich um folgende Schritte:
Schritt A: Erfassen von Feedback-Informationen mittels einer Mensch-Maschine-Schnittstelle 3, im Folgenden MMS, des Gerätes 1, und/oder mittels zumindest eines Sensors 6 des Gerätes 1.

Wie bereits erwähnt, können die Feedback-Informationen auf unterschiedliche Arten erfasst werden. Gemäß Schritt A1 ist vorgesehen, dass die Feedback-Information eine Nutzer-Rückmeldung umfasst, die über die MMS 3 vom Nutzer 12 angefordert wird, insbesondere in Form einer Frage an den Nutzer 12. Dabei kann es sich insbesondere um eine "Nutzereingabe-Aufforderung" handeln, die im Rahmen des Schritts G bereits verändert wurde - siehe schematischer Rückschluss 15 von Schritt G auf Schritt A in Fig. 2 - oder die im Auslieferungszustand des Gerätes 1 bereits aktiviert ist.

Des Weiteren kann gemäß Schritt A2 die erfasste Feedback-Information eine Bedienungseingabe umfassen. Diese Bedienungseingabe wird vom Nutzer 12 an der MMS 3 vorgenommen und dient zum Bedienen des Gerätes 1, beispielsweise zum Auswählen, Starten oder Beenden eines Funktionsprogrammes. Für diese Art der Feedback-Information wird von der MMS 3 keine Frage an den Nutzer 12 gestellt, sondern es wird eine ohnehin vom Nutzer 12 vorgenommene Bedienungseingabe zum Bedienen des Gerätes 1 dazu genutzt, um eine Feedback-Information zu erhalten.

Gemäß Schritt A3 kann die erfasste Feedback-Information eine am Gerät 1 vorgenommene Nutzerhandlung des Nutzers 12 umfassen, wobei diese Nutzerhandlung über den zumindest einen Sensor 6 erfasst wird.

Gemäß Schritt A4 kann über den Sensor 6, insbesondere ausgebildet als Kamera, das mit dem Gerät 1 behandelte Nahrungsmittel und/oder zumindest ein Teil des Gerätes 1 und/oder ein Zustand des Gerätes 1 erfasst, woraus entsprechende Sensordaten erzeugt werden. Die Feedback-Information umfasst dann wiederum diese Sensordaten.

Gemäß Schritt A5 kann über den Sensor 6 ein Hilfsmittel-Wert des Geräts 1, insbesondere ein Mengenwert und/oder Qualitätswert eines Hilfsmittels des Geräts 1, erfasst werden. Die Feedback-Information umfasst wiederum den Hilfsmittel-Wert.

Schritt B: Bilden, mittels einer lokalen Steuereinheit 2 im Gerät 1, von Feedback-Datensätzen 13, die ein oder mehrere der Feedback-Information(en) repräsentieren.

Schritt C: Senden der Feedback-Datensätze 13 von dem Gerät 1 zu einer zentralen Recheneinheit 10.

Schritt D: Klassifizieren, mittels der zentralen Recheneinheit 10, der Feedback-Datensätze 13 anhand von zumindest einem hinterlegten Feedback-Vergleichsdatensatz.

Schritt E: Erzeugen, mittels der zentralen Recheneinheit 10, eines Veränderungssignals 14 in Abhängigkeit der Klassifizierung zumindest eines Feedback-Datensatzes 13.

Schritt F: Senden des Veränderungssignals 14 an das Gerät 1.

Schritt G: Verändern einer an den Nutzer 12 gerichteten Nutzereingabe-Aufforderung der MMS 3 im Gerät 1 basierend auf dem Veränderungssignal 14 und/oder Verändern eines Funktionsprogramms des Geräts 1 basierend auf dem Veränderungssignal 14.

Rein beispielhaft kann der Verfahrensablauf wie Folgt sein: Zum Beispiel kann mit dem Sensor 6 (Kamera) erfasst werde, welches Nahrungsmittel (z.B. Brezen) ein Nutzer 12 in das Gerät 1 (z.B. Kombidämpfer) einschiebt. Daraufhin kann die MMS 3 den Nutzer 12 fragen, ob wirklich Brezen eingeschoben wurden. Der Feedback-Datensatz 13 enthält dann die Information darüber, welches Nahrungsmittel erkannt wurde und ob der Nutzer 12 dies bestätigt hat. Die zentrale Recheneinheit 10 kann diese Feedback-Datensätze 13 von vielen Geräten 1 über einen längeren Zeitraum sammeln und statistisch auswerten. Dabei kann sich rein beispielhaft ergeben, dass Brezen in der Regel von der Kamera sehr gut identifiziert werden, wohingegen Croissants oftmals nicht richtig identifiziert werden. Im Feedback-Vergleichsdatensatz wird in diesem theoretischen Beispiel hinterlegt, dass ein Feedback-Datensatz 13 "unglaubwürdig" ist, wenn darin beschrieben ist, dass bei (durch die Kamera) erkannten Brezen von Nutzer 12 eine Falscherkennung an der MMS 3 eingegeben wurde. Im Schritt D können dadurch zukünftige Feedback-Datensätze 13 ggf. als "unglaubwürdig" klassifiziert werden, wodurch über das Veränderungssignal 14 das zugrundeliegende Gerät 1 durch Deaktivierung der Nutzereingabe-Aufforderung davon ausgeschlossen wird, weitere Rückmeldung zu geben. Wird andererseits erkannt, dass von einem Gerät 1 relativ häufig "glaubwürdige" Feedback-Datensätze 13 kommen, so können über das Veränderungssignal 14 weitere Nutzereingabe-Aufforderungen an der MMS 3 an diesem Gerät 1 aktiviert werden.

Zur Veranschaulichung sei an dieser Stelle ein weiteres Beispiel beschrieben: Das Verfahren berücksichtigt beispielhaft zwei Gerätegruppen 11 in unterschiedlichen Regionen mit jeweils mehreren Geräten 1, ausgebildet als Fritteusen. Im Rahmen des Schrittes A wird als Feedback-Information 13 in beiden Gruppen 11 an mehreren Geräten 1 erfasst, ob vorgeschlagene Wechselintervalle zum Auswechseln des Frittieröls eingehalten werden. Beispielsweise über den Sensor 6, der die Qualität des Öls erfasst, kann festgestellt werden, ob tatsächlich ein Auswechseln erfolgte oder nicht. In der zentralen Recheneinheit 10 können die mehreren Feedback-Datensätze 13 statistisch ausgewertet werden, wodurch sich beispielsweise ergibt, dass in der einen Region die vorgeschlagenen Wechselintervalle eingehalten werden und in der anderen Region nicht. Feedback-Datensätze 13, die in dieses Muster passen, können als glaubwürdig identifiziert werden, sodass zugrundeliegende Geräte 1 am folgende Prozess teilnehmen können: Über ein entsprechendes Veränderungssignal 14 werden die Geräte 1 angesteuert, sodass eine an den Nutzer 12 gerichtete Nutzereingabe-Aufforderung der MMS 3 verändert wird. Dabei kann beispielsweise an eben diesen Geräten 1 über die MMS eine Frage an den Nutzer gestellt werden, beispielsweise, welchen Öllieferanten er verwendet oder welche Nahrungsmittel frittiert werden.

Fig. 3 zeigt das Gerät 1 in der Ausgestaltung als Kombi-Dämpfer. Dargestellt ist die Steuereinheit 2, die mit einer Datenschnittstelle 7 verbunden ist. Über die Datenschnittstelle 7 erfolgt der Datenaustausch mit der zentralen Recheneinheit 10. Die Steuereinheit 2 kann das Veränderungssignal gemäß Schritt G auswerten und daraufhin das Gerät 1 entsprechend ansteuern. Insbesondere erfolgt über dieses Veränderungssignal ein Verändern der Mensch-Maschine-Schnittstelle 3, im Folgenden MMS 3. Wie Fig. 3 rein schematisch zeigt, kann die MMS 3 ein berührungsempfindliches Display 4 und/oder eine Sprachsteuereinheit 5 umfassen. Sowohl über das Display 4 als auch über die Sprachsteuereinheit 5 ist es möglich, mit dem Nutzer 12 Informationen auszutauschen.

Wie im allgemeinen Teil der Beschreibung erläutert, ist im Verfahrensschritt A1 vorgesehen, eine Nutzereingabe-Aufforderung beispielsweise in Form einer Frage zu erzeugen. Dies erfolgt mit der hier dargestellten MMS 3. Auf diese Frage kann der Nutzer 12 beispielsweise mit JA oder NEIN antworten, woraus sich dann sich die Feedback-Information erzeugt.

Des Weiteren kann der Nutzer 12 an der MMS 3 auch übliche Bedienungseingaben vornehmen, um beispielsweise ein Funktionsprogramm des Gerätes 1 zu starten. Auch dabei kann es sich, wie im Rahmen des Schrittes A2 im allgemeinen Teil beschrieben wurde, um den Bestandteil einer Feedback-Information handeln, die über die MMS 3 erfasst wird.

Des Weiteren kann im Schritt G die MMS 3 dahingehend verändert werden, dass eine Nutzereingabe-Aufforderung der MMS 3 aktiviert, deaktiviert oder inhaltlich verändert wird. Auch dies ist im Zusammenspiel der Steuereinheit 2 mit der MMS 3 möglich. Auf diese Nutzereingabe-Aufforderung der MMS 3 folgt wiederum eine Nutzer-Rückmeldung seitens des Nutzers 12, die im Schritt A1 eine Feedback-Information bilden kann.

Fig. 4 verdeutlicht, dass auch andere Geräte 1, in diesem Beispiel eine Fritteuse, zur Anwendung kommen können. Auch dieses Gerät 1 gemäß Fig. 4 umfasst die Steuereinheit 2 und die Datenschnittstelle 7. Wiederum ist eine MMS 3 mit Display 4 und/oder Sprachsteuereinheit 5 vorgesehen.

In der Ausgestaltung nach Fig. 3 ist ein Sensor 6 in Form einer Kamera angeordnet. Dieser Sensor 6 kann zur Erfassung der Feedback-Informationen gemäß Schritt A3 oder A4 (s. allgemeiner Teil der Beschreibung) ausgebildet sein. Demgegenüber zeigt Fig. 4 die Ausbildung des Sensors 6 für die Erfassung der Feedback-Information gemäß Schritt A5 (s. allgemeiner Teil der Beschreibung), wobei mit dem Sensor 6 in der Ausgestaltung nach Fig. 4 der Hilfsmittel-Wert, im konkreten Beispiel die Qualität des Öls der Fritteuse, erfasst wird.

Zur Vervollständigung der Beschreibung des Ausführungsbeispiels, welches anhand der Fig. 1 bis 4 schematisch darstellt ist, wird auf dem allgemeinen Teil der Beschreibung verwiesen.

### Bezugszeichenliste

- 1: Gerät
- 2: lokale Steuereinheit
- 3: Mensch-Maschine-Schnittstelle (MMS)
- 6: Sensor
- 7: Datenschnittstelle
- 10: zentrale Recheneinheit
- 11: Gerätegruppen
- 12: Nutzer
- 13: Feedback-Datensätze
- 14: Veränderungssignal
- 15: Rückschluss

## Patentansprüche

1. Verfahren zum Betreiben zumindest eines Nahrungsmittelbehandlungsgerätes, im Folgenden Gerät (1), umfassend die folgenden Schritte:
• **Schritt A:** Erfassen von Feedback-Informationen
o mittels einer Mensch-Maschine-Schnittstelle (3), im Folgenden MMS, des Gerätes (1)
∘ und vorzugsweise mittels zumindest eines Sensors (6) des Gerätes (1),
• **Schritt B:** Bilden, mittels einer lokalen Steuereinheit (2) im Gerät (1), von Feedback-Datensätzen (13), die die Feedback-Informationen repräsentieren,
• **Schritt C:** Senden der Feedback-Datensätze (13) von dem Gerät (1) zu einer zentralen Recheneinheit (10),
• **Schritt D:** Klassifizieren, mittels der zentralen Recheneinheit (10), der Feedback-Datensätze (13) anhand von zumindest einem hinterlegten Feedback-Vergleichsdatensatz,
• **Schritt E:** Erzeugen, mittels der zentralen Recheneinheit (10), eines Veränderungssignals (14) in Abhängigkeit der Klassifizierung zumindest eines Feedback-Datensatzes (13),
• **Schritt F:** Senden des Veränderungssignals (14) an das Gerät (1),
• **Schritt G:** Verändern einer an den Nutzer (12) gerichteten Nutzereingabe-Aufforderung der MMS (3) im Gerät (1) basierend auf dem Veränderungssignal (14).

2. Verfahren nach Anspruch 1, wobei im **Schritt A:**
• Gemäß einem **Schritt A1** die erfasste Feedback-Information eine Nutzer-Rückmeldung umfasst, die über die MMS (3) vom Nutzer (12) angefordert wird, insbesondere in Form einer Frage an den Nutzer (12),
• und/oder gemäß einem **Schritt A2** die erfasste Feedback-Information eine vom Nutzer (12) an der MMS (3) vorgenommene Bedienungseingabe zum Bedienen des Gerätes (1) umfasst,
• und/oder gemäß **Schritt A3** die erfasste Feedback-Information eine über den Sensor (6) erfasste, am Gerät (1) vorgenommene Nutzerhandlung des Nutzers (12) umfasst.

3. Verfahren nach einem der vorhergehenden Ansprüche, wobei im **Schritt A:**
• Gemäß einem **Schritt A4** der Sensor (6), insbesondere ausgebildet als Kamera, das mit dem Gerät (1) behandelte Nahrungsmittel und/oder zumindest einen Teil des Gerätes (1) selbst und/oder einen Zustand des Gerätes (1) erfasst und daraus Sensordaten erzeugt, wobei die Feedback-Information die Sensordaten umfasst,
• und/oder gemäß einem **Schritt A5** über den Sensor (6) ein Hilfsmittel-Wert des Geräts (1), insbesondere ein Mengenwert und/oder Qualitätswert eines Hilfsmittels des Geräts (1), erfasst wird, wobei die Feedback-Information den Hilfsmittel-Wert umfasst.

4. Verfahren nach einem der vorhergehenden Ansprüche, wobei mehrere Gerätegruppen (11) mit jeweils mehreren der Geräte (1) definiert sind, wobei zu Geräten (1) jeder Gerätegruppe (11) im **Schritt A** Feedback-Information erfasst wird und/oder im **Schritt F** das Veränderungssignal (14) gesendet wird.

5. Verfahren nach Anspruch 4, wobei sich die Geräte (1) der unterschiedlichen Gerätegruppen (11) zumindest hinsichtlich folgender Eigenschaften unterscheiden:
• Gerätetyp der Geräte (1),
• und/oder Einsatzzweck der Geräte (1),
• und/oder regionaler Aufstellungsort der Geräte (1),
• und/oder Geräteausstattung der Geräte (1).

6. Verfahren nach einem der vorhergehenden Ansprüche, wobei im **Schritt D** der Feedback-Datensatz (13) in Abhängigkeit seiner, insbesondere graduellen, Übereinstimmung mit zumindest einem Feedback-Vergleichsdatensatz klassifiziert wird.

7. Verfahren nach Anspruch 6, wobei die Übereinstimmung, insbesondere der Grad der Übereinstimmung, des Feedback-Datensatz (13) mit dem zumindest einen Feedback-Vergleichsdatensatz in der zentralen Recheneinheit (10) mittels künstlicher Intelligenz ermittelt wird.

8. Verfahren nach einem der vorhergehenden Ansprüche, wobei im **Schritt D** das Klassifizieren der Feedback-Datensätze (13) anhand von Feedback-Vergleichsdatensätzen erfolgt, die basieren auf:
• mehreren Feedback-Datensätzen (13) desselben Gerätes (1),
• und/oder aus mehreren Feedback-Datensätzen (13) mehrere Geräte (1), insbesondere derselben Gerätegruppe (11),
• und/oder aus empirischen Daten.

9. Verfahren nach einem der vorhergehenden Ansprüche, wobei in der zentralen Recheneinheit (10) der zumindest eine Feedback-Vergleichsdatensatz durch statistische Auswertung mehrerer Feedback-Datensätze (13) erzeugt wird.

10. Verfahren nach Anspruch 9, wobei bei der statistischen Auswertung, insbesondere mittels Künstlicher Intelligenz, Muster und/oder Regelmäßigkeiten und/oder Unregelmäßigkeiten und/oder Cluster in den mehreren Feedback-Datensätzen (13) identifiziert werden.

11. Verfahren nach einem der Ansprüche 4 bis 10,
• wobei im **Schritt E** das Veränderungssignal (14) in Abhängigkeit der Klassifizierung der Feedback-Datensätze (13) eines Gerätes (1) einer der Gerätegruppen (11), mehrere Geräte (1) einer der Gerätegruppen (11) oder aller Geräte (1) einer der Gerätegruppen (11) erzeugt wird,
• und wobei im **Schritt F** dasselbe Veränderungssignal (14) an mehrere oder alle Geräte (1) einer der Gerätegruppen (11) gesendet wird.

12. Verfahren nach einem der vorhergehenden Ansprüche, wobei in Abhängigkeit der Klassifizierung des Feedback-Datensatzes (13) ein Veränderungsdatensatz mittels der zentralen Recheneinheit erzeugt und/oder verändert wird,
• wobei im Veränderungsdatensatz hinterlegt wird, in welcher Weise und/oder zu welchem Zeitpunkt mittels des Veränderungssignals (14) die Nutzereingabe-Aufforderung der MMS (3) am Gerät (1) verändert wird,
• und/oder wobei im Veränderungsdatensatz hinterlegt wird, in welcher Weise und/oder zu welchem Zeitpunkt mittels des Veränderungssignals (14) das Funktionsprogramm des Gerätes (1) verändert wird.

13. Verfahren nach einem der vorhergehenden Ansprüche, wobei basierend auf dem Veränderungssignal (14) zumindest eines der folgenden Funktionsprogramme vollständig oder teilweise verändert wird:
• ein Nahrungsmittelbehandlungs-Programm zur Behandlung von Nahrungsmitteln in dem Gerät (1),
• und/oder ein Reinigungs-Programm zum Reinigen des Gerätes (1),
• und/oder ein Assistenzprogramm, das den Nutzer bei der Bedienung und/oder Wartung des Gerätes unterstützt.

14. Verfahren nach einem der vorhergehenden Ansprüche, wobei **Schritt G** umfasst:
Verändern eines Funktionsprogramms des Geräts (1) basierend auf dem Veränderungssignal (14).

15. Nahrungsmittelbehandlungsgerät, im Folgenden Gerät (1), ausgebildet zur Benutzung bei der Durchführung eines Verfahrens nach einem der vorhergehenden Ansprüche,
wobei das Gerät (1) umfasst:
• eine Mensch-Maschine-Schnittstelle (3), im Folgenden MMS, und/oder einen Sensor (6), jeweils ausgebildet zur Durchführung des **Schritts A,**
• eine Steuereinheit (2), ausgebildet zur Durchführung des **Schritts B,**
• eine Datenschnittstelle (7), ausgebildet zum Senden des Feedback-Datensatzes (13) gemäß **Schritts C** und zum Empfangen des gemäß **Schritt F** gesendeten Veränderungssignals (14),
• wobei das Gerät (1), insbesondere die Steuereinheit (2), zum Verändern der an den Nutzer (12) gerichteten Nutzereingabe-Aufforderung der MMS (3) gemäß Schritt G und vorzugsweise zum Verändern des Funktionsprogramms des Geräts (1) gemäß **Schritt G** ausgebildet ist.

## Claims

1. Method for operating at least one food handling device, referred to in the following as the device (1), comprising the following steps:
• **Step A:** capturing feedback information
∘ by means of a human-machine interface (3), HMI in the following, of the device (1)
∘ and preferably by means of at least one sensor (6) of the device (1),
• **Step B:** forming, by means of a local control unit (2) in the device (1), feedback data sets (13) which represent the feedback information,
• **Step C:** sending the feedback data sets (13) from the device (1) to a central computing unit (10),
• **Step D:** classifying, by means of the central computing unit (10), the feedback data sets (13) on the basis of at least one stored feedback comparative data set,
• **Step E:** generating, by means of the central computing unit (10), a modification signal (14) on the basis of the classification of at least one feedback data set (13),
• **Step F:** sending the modification signal (14) to the device (1),
• **Step G:** modifying a user input request by the HMI (3) directed to the user (12) in the device (1) on the basis of the modification signal (14).

2. Method according to claim 1, wherein, in **step A:**
• according to a **step A1,** the captured feedback information includes a user feedback message which is requested by the user (12) via the HMI (3), in particular in the form of a question to the user (12),
• and/or, according to a **step A2,** the captured feedback information includes an operating input performed by the user (12) on the HMI (3) for operating the device (1),
• and/or, according to a **step A3,** the captured feedback information includes a user action by the user (12) which is captured by the sensor (6) and is performed on the device (1).

3. Method according to any of the preceding claims, wherein, in **step A:**
• according to a **step A4,** the sensor (6), in particular configured as a camera, captures the food handled by the device (1) and/or at least one part of the device (1) itself and/or a status of the device (1) and generates sensor data therefrom, wherein the feedback information includes the sensor data,
• and/or, according to a **step A5,** a resource value of the device (1), in particular a quantity value and/or a quality value of a resource of the device (1), is captured by the sensor (6), wherein the feedback information includes the resource value.

4. Method according to any of the preceding claims, wherein a plurality of device groups (11) each having a plurality of the devices (1) are defined, wherein feedback information is captured in **step A** for devices (1) in each device group (11) and/or the modification signal (14) is sent in **step F.**

5. Method according to claim 4, wherein the devices (1) in the different device groups (11) are differentiated at least in terms of the following properties:
• device type of the devices (1),
• and/or intended purpose of the devices (1),
• and/or regional installation location of the devices (1),
• and/or device equipment of the devices (1).

6. Method according to any of the preceding claims, wherein, in **step D,** the feedback data set (13) is classified on the basis of its in particular gradual correspondence with at least one feedback comparative data set.

7. Method according to claim 6, wherein the correspondence, in particular the level of correspondence, of the feedback data set (13) with the at least one feedback comparative data set in the central computing unit (10) is determined by means of artificial intelligence.

8. Method according to any of the preceding claims, wherein, in **step D,** the feedback data sets (13) are classified on the basis of feedback comparative data sets, which are based on:
• a plurality of feedback data sets (13) for the same device (1),
• and/or a plurality of feedback data sets (13) from a plurality of devices (1), in particular the same device group (11),
• and/or empirical data.

9. Method according to any of the preceding claims, wherein the at least one feedback comparative data set is generated in the central computing unit (10) by statistical evaluation of a plurality of feedback data sets (13).

10. Method according to claim 9, wherein in the statistical evaluation, in particular by means of artificial intelligence, patterns and/or regularities and/or irregularities and/or clusters are identified in the plurality of feedback data sets (13).

11. Method according to any of claims 4 to 10,
• wherein, in **step E,** the modification signal (14) is generated on the basis of the classification of the feedback data sets (13) of a device (1) in one of the device groups (11), a plurality of devices (1) in one of the device groups (11), or all the devices (1) in one of the device groups (11),
• and wherein, in **step F,** the same modification signal (14) is sent to a plurality of or all of the devices (1) in one of the device groups (11).

12. Method according to any of the preceding claims, wherein generating and/or modifying a modification data set by means of the central computing unit on the basis of the classification of the feedback data set (13),
• wherein the way in which and/or the point in time at which the user input request by the HMI (3) on the device (1) is modified by means of the modification signal (14) is stored in the modification data set,
• and/or wherein the way in which and/or the point in time at which the function program of the device (1) is modified by means of the modification signal (14) is stored in the modification data set.

13. Method according to any of the preceding claims, wherein at least one of the following function programs is fully or partially modified on the basis of the modification signal (14):
• a food handling program for handling food in the device (1),
• and/or a cleaning program for cleaning the device (1),
• and/or an assistance program, which assists the user in operating and/or performing maintenance on the device.

14. Method according to any of the preceding claims, wherein **step G** comprises:
modifying a function program of the device (1) on the basis of the modification signal (14).

15. Food handling device, referred to in the following as the device (1), configured for use when carrying out a method according to any of the preceding claims, wherein the device (1) comprises:
• a human-machine interface (3), HMI in the following, and/or a sensor (6), each configured to carry out **step A,**
• a control unit (2) configured to carry out **step B,**
• a data interface (7) configured to send the feedback data set (13) according to **step C** and to receive the modification signal (14) sent according to **step F,**
• wherein the device (1), in particular the control unit (2), is configured to modify the user input request by the HMI (3) directed to the user (12) according to **step G** and preferably to modify the function program of the device (1) according to **step G.**

## Revendications

1. Procédé pour faire fonctionner au moins un appareil de traitement de produits alimentaires dans l'appareil (1) suivant, comprenant les étapes suivantes :
- étape A : la détection d'informations en retour
-- au moyen d'une interface homme-machine (3), désignée ci-après par IHM, de l'appareil (1),
-- et de préférence au moyen d'au moins un capteur (6) de l'appareil (1),
- étape B : l'obtention, au moyen d'une unité de commande locale (2) dans l'appareil (1), d'ensembles de données en retour (13), qui représentent les informations en retour,
- étape C : l'envoi des ensembles de données en retour (13) de l'appareil (1) à une unité de calcul centrale (10),
- étape D : la classification, au moyen de l'unité de calcul centrale (10), de l'ensemble de données en retour (13) à l'aide d'au moins un ensemble de données de comparaison en retour enregistré,
- étape E : la génération, au moyen de l'unité de calcul centrale (10), d'un signal de modification (14) en fonction de la classification d'au moins un ensemble de données en retour (13),
- étape F : l'envoi du signal de modification (14) à l'appareil (1),
- étape G : la modification d'une demande d'entrée d'utilisateur, adressée à l'utilisateur (12), de l'IHM (3) dans l'appareil (1) sur la base du signal de modification (14).

2. Procédé selon la revendication 1, dans lequel dans l'étape A :
- selon une étape A1, l'information en retour détectée comprend une réponse d'utilisateur, qui est demandée par l'utilisateur (12) par l'intermédiaire de l'IHM (3), en particulier sous la forme d'une question à l'utilisateur (12),
- et/ou selon une étape A2, l'information en retour détectée comprend une entrée d'utilisation réalisée par l'utilisateur (12) sur l'IHM (3) pour utiliser l'appareil (1),
- et/ou selon l'étape A3, l'information en retour détectée comprend une action de l'utilisateur (12) détectée par l'intermédiaire du capteur (6), réalisée sur l'appareil (1).

3. Procédé selon l'une quelconque des revendications précédentes, dans lequel dans l'étape A :
- selon une étape A4, le capteur (6), réalisé en particulier en tant que caméra, détecte le produit alimentaire traité avec l'appareil (1) et/ou au moins une partie de l'appareil (1) lui-même et/ou un état de l'appareil (1) et génère sur cette base des données de capteur, dans lequel l'information en retour comprend les données de capteur,
- et/ou selon une étape A5, une valeur de moyen auxiliaire de l'appareil (1), en particulier une valeur de quantité et/ou une valeur de qualité d'un moyen auxiliaire de l'appareil (1) est détectée par le capteur (6), dans lequel l'information en retour détecte la valeur de moyen auxiliaire.

4. Procédé selon l'une quelconque des revendications précédentes, dans laquelle plusieurs groupes d'appareils (11) sont définis avec respectivement plusieurs des appareils (1), dans lequel une information en retour est détectée pour des appareils (1) de chaque groupe d'appareils (11) dans l'étape A et/ou le signal de modification (14) est envoyé dans l'étape F.

5. Procédé selon la revendication 4, dans lequel les appareils (1) des différents groupes d'appareils (11) se distinguent au moins quant aux caractéristiques suivantes :
- type d'appareil des appareils (1),
- et/ou usage prévu des appareils (1),
- et/ou emplacement d'installation régional des appareils (1),
- et/ou équipement des appareils (1).

6. Procédé selon l'une quelconque des revendications précédentes, dans lequel l'ensemble de données en retour (13) est classé dans l'étape D en fonction de sa concordance en particulier graduelle avec au moins un ensemble de données de comparaison en retour.

7. Procédé selon la revendication 6, dans lequel la concordance, en particulier le degré de la concordance, de l'ensemble de données en retour (13) avec l'au moins un ensemble de données de comparaison en retour est déterminée dans l'unité de calcul centrale (10) au moyen d'une intelligence artificielle.

8. Procédé selon l'une quelconque des revendications précédentes, dans lequel dans l'étape D, la classification des ensembles de données en retour (13) est effectuée à l'aide d'ensembles de données de comparaison en retour, qui se basent sur :
- plusieurs ensembles de données en retour (13) du même appareil (1),
- et/ou plusieurs ensembles de données en retour (13) de plusieurs appareils (1), en particulier du même groupe d'appareils (11),
- et/ou des données empiriques.

9. Procédé selon l'une quelconque des revendications précédentes, dans lequel l'au moins un ensemble de données de comparaison en retour est généré, dans l'unité de calcul centrale (10) par une évaluation statistique de plusieurs ensembles de données en retour (13).

10. Procédé selon la revendication 9, dans lequel des modèles et/ou des régularités et/ou des irrégularités et/ou des groupements sont identifiés dans les plusieurs ensembles de données en retour (13) lors de l'évaluation statique, en particulier au moyen de l'intelligence artificielle.

11. Procédé selon l'une quelconque des revendications 4 à 10,
- dans lequel dans l'étape E, le signal de modification (14) est généré en fonction de la classification des ensembles de données en retour (13) d'un appareil (1) d'un des groupes d'appareils (11) de plusieurs appareils (1) d'un des groupes d'appareils (11) ou de tous les appareils (1) d'un des groupes d'appareils (11),
- et dans lequel dans l'étape F, le même signal de modification (14) est envoyé à plusieurs ou à tous les appareils (1) d'un des groupes d'appareils (11).

12. Procédé selon l'une quelconque des revendications précédentes, dans lequel un ensemble de données de modification est généré et/ou modifié au moyen de l'unité de calcul centrale en fonction de la classification de l'ensemble de données en retour (13),
- dans lequel sont enregistrés dans l'ensemble de données de modification la manière selon laquelle et/ou le moment auquel la demande d'entrée d'utilisateur de l'IHM (3) est modifiée sur l'appareil (1) au moyen du signal de modification (14),
- et/ou dans lequel sont enregistrés dans l'ensemble de données de modification, la manière selon laquelle et/ou le moment auquel le programme fonctionnel de l'appareil (1) est modifié au moyen du signal de modification (14).

13. Procédé selon l'une quelconque des revendications précédentes, dans lequel au moins un des programmes fonctionnels suivants est modifié en totalité ou en partie sur la base du signal de modification (14) :
- un programme de traitement de produits alimentaires destiné à traiter des produits alimentaires dans l'appareil (1),
- et/ou un programme de nettoyage destiné à nettoyer l'appareil (1),
- et/ou un programme d'assistance, qui soutient l'utilisateur lors de l'utilisation et/ou de la maintenance de l'appareil.

14. Procédé selon l'une quelconque des revendications précédentes, dans lequel l'étape G comprend :
la modification d'un programme fonctionnel de l'appareil (1) sur la base du signal de modification (14).

15. Appareil de traitement de produits alimentaires, ci-après appareil (1), réalisé pour être utilisé lors de la mise en oeuvre d'un procédé selon l'une quelconque des revendications précédentes,
dans lequel l'appareil (1) comprend :
- une interface homme-machine (3), désignée ci-après par IHM, et/ou un capteur (6), réalisés respectivement pour la mise en oeuvre de l'étape A,
- une unité de commande (2) réalisée pour la mise en oeuvre de l'étape B,
- une interface de données (7) réalisée pour envoyer l'ensemble de données en retour (13) selon l'étape C et pour recevoir le signal de modification (14) envoyé selon l'étape F,
- dans lequel l'appareil (1), en particulier l'unité de commande (2), est réalisé pour modifier la demande d'entrée d'utilisateur, adressée à l'utilisateur (12), de l'IHM (3) selon l'étape G et de préférence pour modifier le programme fonctionnel de l'appareil (1) selon l'étape G.
